# EUROPÄISCHE PATENTSCHRIFT

(11) **EP 4 301 996 B1**
(45) Veröffentlichungstag und Bekanntmachung des Hinweises auf die Patenterteilung: **26.02.2025**
(21) Anmeldenummer: 22709712.8
(22) Anmeldetag: 01.03.2022
(51) Int. Cl.: F16D 51/00, F16D 65/00

(54) **RADANORDNUNG FÜR EIN KRAFTFAHRZEUG**
WHEEL ARRANGEMENT FOR A MOTOR VEHICLE
AGENCEMENT DE ROUE POUR UN VÉHICULE À MOTEUR

(30) Priorität: 04.03.2021 DE 102021202084
(43) Veröffentlichungstag der Anmeldung: 10.01.2024
(73) Patentinhaber: Stellantis Auto SAS, 78300 Poissy (FR)
(72) Erfinder: EHRLICH, Dirk, 65428 Rüsselsheim am Main (DE); BAUSCH, Olaf, 65428 Rüsselsheim am Main (DE)
(74) Vertreter: BCIP
(86) Internationale Anmeldenummer: PCT/EP2022/055149
(87) Internationale Veröffentlichungsnummer: WO 2022/184711

(56) Entgegenhaltungen:
- DE-A1- 102018 220 864
- JP-A- 2012 197 925
- US-A- 2 988 173

## Beschreibung

### Technisches Gebiet

Die Erfindung betrifft Radanordnung für ein Kraftfahrzeug.

### Stand der Technik

In Kraftfahrzeugen werden üblicherweise Reibungsbremsen zur Geschwindigkeitsreduktion eingesetzt. Reibungsbremsen weisen in der Regel einen oder mehrere Bremsbeläge und wenigstens einen Reibpartner, z.B. eine Bremsscheibe oder eine Bremstrommel auf, an dem bzw. der wenigstens ein Bremsbelag reibt. Bei einer Trommelbremse kann die Bremstrommel im Wesentlichen aus Eisenguss bestehen, während für die Bremsbeläge Stahlwolle als ein Hauptbestandteil Verwendung findet. Bei einem Bremsvorgang wird dabei eisenhaltiger und damit magnetischer Bremsenabrieb erzeugt. Sofern dieser Bremsabrieb nicht aufgefangen wird, werden Partikel des Bremsenabriebs in die Umwelt emittiert, wodurch die Feinstaubbelastung erhöht wird. Darüber hinaus verschmutzet dieser auch als Bremsstaub bezeichneter Abrieb, der Partikelgrößen von etwa 10 nm - 10 µm aufweisen kann, die Radfelgen, an denen die Bremsen montiert sind. Ferner kann der Bremsstaub auch zu einer Verschmutzung eines Innenraums der Trommelbremse führen. Aus der DE 10 2018 220 864 A1 ist eine Trommelbremse eines Kraftfahrzeugs bekannt, bei der in einem Luftspalt zwischen Bremstrommel und Ankerplatte wenigstens ein Magnet zum Sammeln von Bremsstaub angeordnet ist.

Aus dem Stand der Technik sind ferner die US 2 988 173 A und die JP 2012 197925 A bekannt.

### Kurzbeschreibung der Erfindung

Vor diesem Hintergrund liegt der Erfindung die Aufgabe zugrunde, eine Anordnung bereitzustellen, die kostengünstiger und einfacher zu warten ist.

Vorgeschlagen wird dementsprechend eine Radanordnung gemäß dem unabhängigen Anspruch 1. Weiterführende Ausgestaltungen sind Gegenstand der jeweils abhängigen Ansprüche.

Gemäß einem ersten Aspekt der Erfindung wird die Aufgabe gelöst durch eine Radanordnung für ein Kraftfahrzeug, die eine Radfelge und eine Trommelbremse umfasst. Die Trommelbremse ist an einer Innenseite der Radfelge angebracht. Ein Magnetband ist auf einem Flächenabschnitt einer inneren Umfangsfläche der Radfelge derart umlaufend befestigt angeordnet, dass das Magnetband ein Gehäuse der Trommelbremse zumindest abschnittsweise in axialer Richtung koaxial umringt.

Eine Idee hinter der vorliegenden Erfindung ist, magnetische Partikel im Bremsstaub einer Trommelbremse mittels einer magnetischen Sammeleinrichtung im Inneren einer Radfelge einzusammeln. Die für die Gesundheit bedenklichsten Partikel, die in der Lunge und im menschlichen Körper zu Schädigungen führen können, sind meist metallisch. Im Servicefall können die Magnetbänder in den jeweiligen Radfelgen zum Beispiel mittels Hochdruckreiniger einfach gereinigt und anschließen wiederverwendet werden.

Gemäß einer Weiterbildung kann der Flächenabschnitt in axialer Richtung im Wesentlichen zylinderförmig ausgebildet sein.

Die Sammeleinrichtung ist einfach an bestehende Layouts von Radfelgen mit Trommelbremsen adaptierbar, in dem die magnetische Sammeleinrichtung auf einem zylindrischen inneren Felgenabschnitt befestigt angeordnet werden. Änderungen an Radfelgen und Bremsen sind nicht notwendig.

Gemäß einer Weiterbildung kann das Gehäuse der Trommelbremse aus einer Bremstrommel und einer Ankerplatte gebildet sein, wobei zwischen der Ankerplatte und der Bremstrommel ein Luftspalt ausgebildet ist.

Über den Luftspalt können die durch Abrieb entstandenen Bremspartikel aus dem Inneren des Gehäuses der Trommelbremse geführt werden.

Gemäß einer Weiterbildung kann der Luftspalt an einer Außenseite in Umfangsrichtung des Gehäuses derart ausgerichtet ist, dass Bremspartikel aus einem Gehäuseinneren auf das Magnetband gelenkt sind.

Dadurch können die Bremspartikel aus dem Luftspalt durch die Zentrifugalkraft der rotierenden Bremstrommel auf das Magnetband treffen. Das Magnetband ist dazu vorzugsweise in radialer Richtung genau über dem Luftspalt zwischen Bremstrommel und Ankerplatte verklebt angeordnet.

Gemäß einer Weiterbildung kann das Magnetband an der inneren Umfangsfläche der Radfelge geklebt sein.

In einem Fahrzeugwerk werden die Auswuchtklebegewichte vollautomatisch an der Felge montiert. Auf dieselbe Art und Weise kann ein geklebtes Magnetband an der Felge positioniert und befestigt werden, so dass bei der Montage im Wesentlichen auf die gleichen Werkzeuge zurückgegriffen werden kann.

Gemäß einer Weiterbildung kann das das Magnetband Neodym enthalten.

Durch ein in der Felge verklebtes Neodym-Magnetband werden die eisenhaltigen Bremspartikel gebunden und gelangen so nicht in die Umwelt.

Gemäß einer Weiterbildung kann das Magnetband aus einzelnen aneinander angrenzend befestigten magnetischen Abschnitten bestehen.

Ein mehrteiliges Magnetband kann insbesondre zu Reparaturzwecken einfach handhabbar sein.

In dem Gehäuse der Trommelbremse kann ein paar Bremsbeläge angeordnet sein.

Gemäß einer Weiterbildung kann Stahlwolle ein wesentlicher Materialbestandteil der Bremsbeläge sein.

Die vorgeschlagene technische Lösung ist für Aluminium- und Stahlfelgen einsetzbar. Durch ausreichend groß dimensionierte magnetische Sammelflächen sind lange Service-Intervalle möglich. Die Felgen verschmutzen weniger, bzw. müssen seltener gereinigt werden

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktions-gleiche Teile sind mit gleichen Bezugszeichen versehen. Dabei zeigen:

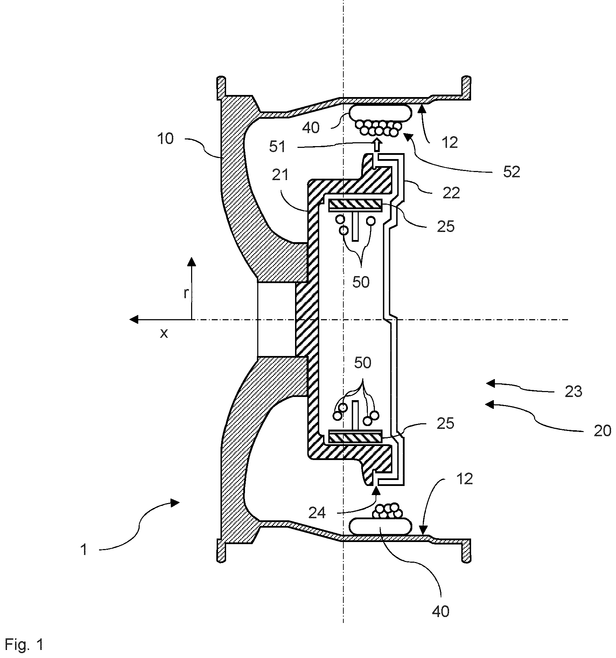

Figur 1 zeigt eine erfindungsgemäße Radanordnung.

### Beschreibung der Ausführungsarten

In der Figur 1 ist eine Radanordnung 1 für ein Kraftfahrzeug dargestellt, die eine Radfelge 10 in Form einer Aluminium- oder Stahlfelge umfasst. Im Inneren der Radfelge 10 liegt eine Trommelbremse 20 an einer Radanlage der Radfelge 10 an. Die Trommelbremse 20 ist über eine Nabenbohrung zur Radfelge 10 zentriert und über eine Anzahl von Radmuttern, die in der Figur nicht dargestellt sind, mit dieser verschraubt verbunden.

Die Trommelbremse 20 umfasst eine Bremstrommel 21 und eine Ankerplatte 22, die zusammen ein zweiteiliges Gehäuse 23 bilden. Im inneren des Gehäuses 23 ist ein Paar Bremsbeläge 25, die mittels eines in der Figur nicht dargestellten Aktuators gegen eine innere Reibfläche der Bremstrommel 21 gepresst werden können. Durch eine Reibung zwischen Bremsbelag 25 und Reibfläche entstehen während eines Bremsvorganges Bremspartikel 50 im Inneren des Gehäuses 23.

Zwischen der Bremstrommel 21 und der Ankerplatte 22 befindet sich ein Luftspalt 24 der eine labyrinthartige Verbindung zwischen dem Inneren des Gehäuses 23 und der äußeren Umgebung herstellt. Die Trommelbremse 20 kann über den Luftspalt 24 belüftet bzw. entlüftet werden. Ferner kann ein Partikelstrom 51 mit den Bremspartikeln 50 über den Luftspalt 24 in die Umwelt entweichen.

Der Luftspalt 24 mündet in einer schlitzartigen Mündung, die in einer im Wesentlichen zylindrischen äußeren Umfangsseite der Trommelbremse 20 umlaufend verläuft.

Auf einem Flächenabschnitt 12 auf einer inneren Umfangsfläche der Radfelge 10 ist ein Magnetband 40 umlaufend befestigt angeordnet. Der Flächenabschnitt 12 weist eine, zur Rotationsachse der Radfelge 10 zentrierte, zylinderförmige Fläche auf.

Wie in der in Figur zu erkennen ist, ist das Magnetband 40 über dem Luftspalt 24 zwischen der Bremstrommel 21 und der Ankerplatte 22 verklebt angeordnet. Somit kann der Partikelstrom 51 durch die Zentrifugalkraft der rotierenden Bremstrommel 21 in radialer Richtung r auf das Magnetband treffen. Das Magnetband 40 kann in axialer Richtung x zu dem Luftspalt 24 der Trommelbremse 20 zentriert ausgerichtet sein.

Bremspartikel 50 werden über den Partikelstrom 51 aus dem Inneren des Gehäuses 23 auf den Magnetstreifen 40 gelenkt, auf dem sie als Partikelanhaftung 52 haften bleiben.

Die Partikelanhaftung 52 auf dem Magnetstreifen 40 kann beispielsweise beim Räderwechsel mittels Hochdruckreiniger gereinigt werden.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Liste der Bezugszeichen

- 1: Radanordnung
- 10: Radfelge
- 12: Flächenabschnitt
- 20: Trommelbremse
- 21: Bremstrommel
- 22: Ankerplatte
- 23: Gehäuse
- 24: Luftspalt
- 25: Bremsbelag
- 40: Magnetstreifen
- 50: Bremspartikeln
- 51: Partikelstrom
- 52: Partikelanhaftung
- x: axiale Richtung
- r: radiale Richtung

## Patentansprüche

1. Radanordnung für ein Kraftfahrzeug, umfassend eine Radfelge (10) und eine Trommelbremse (20), wobei die Trommelbremse (20) an einer Innenseite der Radfelge (10) angebracht ist, **dadurch gekennzeichnet, dass** ein Magnetband (40) auf einem Flächenabschnitt (12) einer inneren Umfangsfläche der Radfelge (10) derart umlaufend befestigt angeordnet ist, dass das Magnetband (40) ein Gehäuse (23) der Trommelbremse (20) zumindest abschnittsweise in axialer Richtung (x) koaxial umringt.

2. Radanordnung gemäß dem vorstehenden Anspruch 1, wobei der Flächenabschnitt (12) in axialer Richtung (x) im Wesentlichen zylinderförmig ausgebildet ist.

3. Radanordnung gemäß einem der vorstehenden Ansprüche 1 oder 2, wobei das Gehäuse (23) der Trommelbremse (20) aus einer Bremstrommel (21) und einer Ankerplatte (22) gebildet ist, wobei zwischen der Ankerplatte (122) und der Bremstrommel (21) ein Luftspalt (24) ausgebildet ist.

4. Radanordnung gemäß dem vorstehenden Anspruch 3, wobei der Luftspalt (24) an einer Außenseite in Umfangsrichtung des Gehäuses (23) derart ausgerichtet ist, dass Bremspartikel aus einem Gehäuseinneren auf das Magnetband (40) gelenkt sind.

5. Radanordnung gemäß einem der vorstehenden Ansprüche 1 bis 4, wobei das Magnetband (40) an der inneren Umfangsfläche der Radfelge (10) geklebt ist.

6. Radanordnung gemäß einem der vorstehenden Ansprüche 1 bis 5, wobei das Magnetband (40) Neodym enthält.

7. Radanordnung gemäß einem der vorstehenden Ansprüche 1 bis 6, wobei das Magnetband (40) aus einzelnen aneinander angrenzend befestigten magnetischen Abschnitten besteht.

8. Radanordnung gemäß einem der vorstehenden Ansprüche 1 bis 7, wobei in dem Gehäuse (23) der Trommelbremse (20) ein paar Bremsbeläge (25) angeordnet ist.

9. Radanordnung gemäß dem vorstehenden Anspruch 8, wobei Stahlwolle ein Materialbestandteil der Bremsbeläge (25) ist.

## Claims

1. Wheel arrangement for a motor vehicle, comprising a wheel rim (10) and a drum brake (20), the drum brake (20) being attached to an inner side of the wheel rim (10), **characterized in that** a magnetic strip (40) is arranged on a surface section (12) of an inner circumferential surface of the wheel rim (10) in such a way that the magnetic strip (40) coaxially surrounds a housing (23) of the drum brake (20) at least in sections in the axial direction (x).

2. Wheel arrangement according to the preceding claim 1, the surface section (12) being essentially cylindrical in the axial direction (x).

3. Wheel arrangement according to one of the preceding claims 1 or 2, wherein the housing (23) of the drum brake (20) is formed from a brake drum (21) and an anchor plate (22), wherein an air gap (24) is formed between the anchor plate (122) and the brake drum (21).

4. Wheel arrangement according to the preceding claim 3, wherein the air gap (24) is aligned on an outer side in the circumferential direction of the housing (23) such that brake particles are directed from an interior of the housing onto the magnetic tape (40).

5. Wheel arrangement according to one of the preceding claims 1 to 4, wherein the magnetic tape (40) is glued to the inner circumferential surface of the wheel rim (10).

6. Wheel arrangement according to one of the preceding claims 1 to 5, wherein the magnetic tape (40) contains neodymium.

7. Wheel assembly according to one of the preceding claims 1 to 6, wherein the magnetic tape (40) consists of individual magnetic sections attached adjacent to one another.

8. Wheel assembly according to one of the preceding claims 1 to 7, wherein a pair of brake pads (25) are arranged in the housing (23) of the drum brake (20).

9. Wheel assembly according to the preceding claim 8, wherein steel wool is a material component of the brake pads (25).

## Revendications

1. Ensemble de roue pour véhicule automobile, comprenant une jante de roue (10) et un frein à tambour (20), le frein à tambour (20) étant fixé sur un côté intérieur de la jante de roue (10), **caractérisé en ce qu'**un aimant la bande magnétique (40) est disposée sur une section de surface ( 12) d'une surface circonférentielle intérieure de la jante de roue (10) de telle manière que la bande magnétique (40) entoure coaxialement un boîtier (23) du frein à tambour ( 20) au moins par sections dans la direction axiale (x).

2. Agencement de roue selon la revendication précédente 1, dans lequel la partie de surface (12) est sensiblement cylindrique dans la direction axiale (x).

3. Ensemble de roue selon l'une des revendications précédentes 1 ou 2, dans lequel le boîtier (23) du frein à tambour (20) est formé d'un tambour de frein (21) et d'une plaque d'ancrage (22), entre la plaque d'ancrage (122) et le tambour de frein (21) un entrefer (24) est formé.

4. Ensemble de roue selon la revendication précédente 3, dans lequel l'entrefer (24) est aligné sur un côté extérieur dans la direction circonférentielle du boîtier (23) de telle sorte que les particules de freinage sont dirigées depuis l'intérieur du boîtier sur la bande magnétique. (40).

5. Ensemble de roue selon l'une des revendications précédentes 1 à 4, dans lequel la bande magnétique (40) est collée sur la surface périphérique intérieure de la jante de roue (10).

6. Ensemble de roue selon l'une des revendications précédentes 1 à 5, dans lequel la bande magnétique (40) contient du néodyme.

7. Ensemble de roue selon l'une des revendications précédentes 1 à 6, dans lequel la bande magnétique (40) est constituée de sections magnétiques individuelles fixées de manière adjacente les unes aux autres.

8. Ensemble de roues selon l'une des revendications précédentes 1 à 7, dans lequel une paire de plaquettes de frein (25) est disposée dans le boîtier (23) du frein à tambour (20).

9. Agencement de roue selon la revendication précédente 8, dans lequel la laine d'acier est un composant matériel des plaquettes de frein (25).
